# FASCICULE DE BREVET EUROPEEN

(11) **EP 3 297 118 B1**
(45) Date de publication et mention de la délivrance du brevet: **16.12.2020**
(21) Numéro de dépôt: 17156587.2
(22) Date de dépôt: 17.02.2017
(51) Int. Cl.: H02J 4/00

(54) **PROCÉDÉ ET SYSTÈME DE GESTION DE LA TENSION D'ALIMENTATION D'UN DISPOSITIF SOURCE USB TYPE C**
VERFAHREN ZUR STEUERUNG DER VERSORGUNGSSPANNUNG UND SYSTEM MIT EINEM GERÄT VOM TYP USB C
SUPPLY VOLTAGE MANAGEMENT METHOD AND SYSTEM OF A USB TYPE C SOURCE DEVICE

(30) Priorité: 14.09.2016 FR 1658582
(43) Date de publication de la demande: 21.03.2018
(73) Titulaire: STMicroelectronics (Grenoble 2) SAS, 38000 Grenoble (FR)
(72) Inventeur: CAMIOLO, Jean, 38120 Saint Egreve (FR); LORIN, Christophe, 38330 Montbonnot (FR)
(74) Mandataire: Casalonga

(56) Documents cités:
- EP-A1- 2 940 592
- US-A1- 2010 181 840
- US-A1- 2013 099 745
- US-A1- 2014 159 678
- US-A1- 2016 118 880

## Description

Des modes de mise en œuvre et de réalisation de l'invention concernent les dispositifs de bus universel en série (« Universal Serial Bus » : USB en anglais), notamment les dispositifs de bus universel en série compatibles avec le standard USB 3.1 et comportant les connecteurs réversibles qui n'imposent pas de sens de branchement, communément connus par l'homme du métier sous le nom du type C, plus particulièrement la détection de chutes de tensions sur des câbles USB reliant deux dispositifs USB.

Théoriquement, les dispositifs USB 3.1 du type C supportant le mode de délivrance de puissance en USB (« USB Power Delivery » mode en anglais) permettent de débiter jusqu'à 10 Go/s et de délivrer jusqu'à 100 W de puissance sur une tension maximale de 20 V et un courant maximal de 5 A. La puissance à délivrer entre deux dispositifs USB 3.1 du type C est négociable par l'intermédiaire de contrôleurs spécifiques et l'alimentation électrique peut avantageusement être bidirectionnelle entre des différents dispositifs USB 3.1 du type C.

D'une façon générale, un câble USB type C est conçu pour être couplé et établir une ligne d'alimentation et de communication entre un dispositif USB type C dit « source » et un dispositif USB type C dit « récepteur ».

US 2016/0118880 A1 décrit une gestion de la tension d'alimentation entre un dispositif USB source type C et un dispositif USB type C récepteur relié par un câble USB type C équipé d'un commutateur. Un sélecteur sélectionne soit la tension de sortie du dispositif source soit la tension sur le câble à un endroit qui est plus proche du dispositif récepteur que du commutateur. Un circuit de contre réaction contrôle la tension d'alimentation de sorte que la tension sélectionnée approche une tension de réglage.

Les connecteurs des dispositifs source ou récepteur USB 3.1 du réversibles. Les deux broches de configuration de canal du dispositif source sont reliées à des résistances de « tirage vers le haut » (« pull-up » en anglais) ou à des sources de courant tandis que les deux broches de configuration de canal du dispositif récepteur sont reliées à des résistances de « tirage vers le bas » (« pull-down » en anglais).

En général, l'intensité électrique élevée de 5A présente dans les câbles USB type C introduit de grandes chutes de tension et il est indispensable d'éviter des chutes de tension totales supérieures à 750 mV lorsque la tension d'alimentation des câbles USB type C est par exemple de 5 V parce que dans ce cas là un dispositif source USB type C risque de ne pas être reconnu par un dispositif récepteur USB type C connecté.

A titre d'exemple, un dispositif source ne peut pas être reconnu en tant que « source » par un dispositif récepteur lorsque la tension d'alimentation de sortie dudit dispositif source est trop faible à cause de la chute importante de tension dans un câble USB type C couplé entre le dispositif source et le dispositif récepteur.

Par ailleurs, les mauvaises qualités ou/et les non-conformités des câbles USB 3.1 type C peuvent également augmenter les chutes de tension au sein desdits câbles.

Ainsi, selon un mode de mise en œuvre et de réalisation, il est proposé d'offrir une solution technique à faible coût et à faible complexité pour surveiller une chute de tension sur un câble USB type C connecté entre un dispositif source USB type C et un dispositif récepteur USB type C, pour compenser ladite chute de tension, et détecter des conditions de surcharge ou de mauvaise qualité dudit câble USB type C.

Différents aspects, modes de mise en œuvre et de réalisation de l'invention sont définis par les revendications annexées.

Selon un aspect, il est proposé un procédé de gestion de la tension d'alimentation sur une broche d'alimentation de sortie d'un dispositif source USB type C couplé à un dispositif récepteur USB type C via un câble USB type C. Ce procédé comprend :
une première mesure d'une première tension sur une broche de configuration de canal du câble lorsque le dispositif récepteur n'est pas alimenté,
une deuxième mesure d'une deuxième tension sur la broche de configuration de canal lorsque le dispositif récepteur est alimenté, un calcul d'une différence entre les première et deuxième tensions, et
une modification de ladite tension d'alimentation en fonction de ladite différence.

Un tel procédé ne nécessite aucune résistance parallèle (« shunt résistance » en anglais) pour mesurer le courant passant dans le câble USB type C. Par ailleurs, ladite première tension est avantageusement auto-étalonnée par le dispositif source lors de l'ouverture d'un commutateur de puissance permettant la délivrance ou l'interruption de la tension d'alimentation et est avantageusement indépendante de la valeur absolue d'une résistance Pull-down du dispositif récepteur ou une source de courant du dispositif source.

Par ailleurs, un tel procédé n'est pratiquement pas ou pas du tout sensible à la variation de fabrication de résistances de « Pull-down » du dispositif récepteur et des sources de courant du dispositif source.

Avantageusement, un tel procédé permet à un dispositif source de délivrer une tension adaptée à un dispositif récepteur connecté via un câble afin de compenser une chute de tension sur ledit câble.

La modification de ladite tension d'alimentation peut comprendre par exemple une augmentation de ladite tension d'alimentation d'une valeur de compensation lorsque ladite différence est inférieure ou égale à un seuil.

A titre indicatif mais non limitatif, la valeur de compensation est comprise entre une fois et trois fois la valeur de ladite différence.

La modification de ladite tension d'alimentation peut également comprendre une interruption de la tension d'alimentation, si ladite différence dépasse le seuil.

Avantageusement, la première mesure de la première tension est effectuée au cours d'une durée pendant laquelle le dispositif récepteur n'est pas alimenté, et la deuxième mesure de la deuxième tension est effectuée à l'issue de ladite durée.

Le procédé peut par exemple comprendre lors de la durée
une première délivrance d'un premier courant sur la broche de configuration de canal et une première mesure initiale d'une première tension initiale sur la broche de configuration de canal, et
une deuxième délivrance d'un deuxième courant, supérieur et proportionnel au premier courant, sur la broche de configuration de canal ainsi qu'une deuxième mesure initiale d'une deuxième tension initiale sur la broche de configuration de canal.

D'autres modes de mise en œuvre sont définies dans les revendications dépendantes.

Selon un autre aspect, il est proposé un système USB type C capable de gérer la tension d'alimentation d'une broche de tension d'alimentation de sortie d'un dispositif source lui-même couplé à un dispositif récepteur USB type C via un câble USB type C. Ledit dispositif source comprend au sein du dispositif source :
des moyens de mesure configurés pour effectuer une première mesure d'une première tension sur une broche de configuration de canal du câble lorsque le dispositif récepteur n'est pas alimenté et une deuxième mesure d'une deuxième tension sur ladite broche de configuration de canal lorsque le dispositif récepteur est alimenté,
des moyens de calcul configurés pour effectuer un calcul d'une différence entre les première et deuxième tensions, et
des moyens de commande configurés pour effectuer une modification de la tension d'alimentation en fonction de ladite différence.

Les moyens de commande peuvent être en outre configurés pour augmenter ladite tension d'alimentation d'une valeur de compensation lorsque ladite différence est inférieure ou égale à un seuil.

A titre d'exemple, la valeur de compensation est comprise entre une fois et trois fois la valeur de ladite différence.

Les moyens de commande peuvent avantageusement être configurés pour interrompre la tension d'alimentation, si ladite différence dépasse le seuil.

Une telle interruption de la tension d'alimentation permet avantageusement de protéger le dispositif source ainsi que le dispositif récepteur.

Les moyens de mesure peuvent par exemple être en outre configurés pour effectuer la première mesure de la première tension au cours d'une durée pendant laquelle le dispositif récepteur n'est pas alimenté, et la deuxième mesure de la deuxième tension à l'issue de ladite durée.

D'autres exemples sont définis dans les revendications dépendantes.

Selon encore un autre aspect, il est proposé un dispositif source USB type C destiné à appartenir à un système USB tel que défini ci-avant.

Selon encore un autre aspect, il est proposé un appareil électronique tel qu'un téléphone portable cellulaire, une tablette, et un ordinateur portable, comprenant un dispositif source USB type C tel que défini ci-dessus.

D'autres avantages et caractéristiques de l'invention apparaîtront à l'examen de la description détaillée de modes de réalisation, nullement limitatifs, et des dessins annexés sur lesquels :

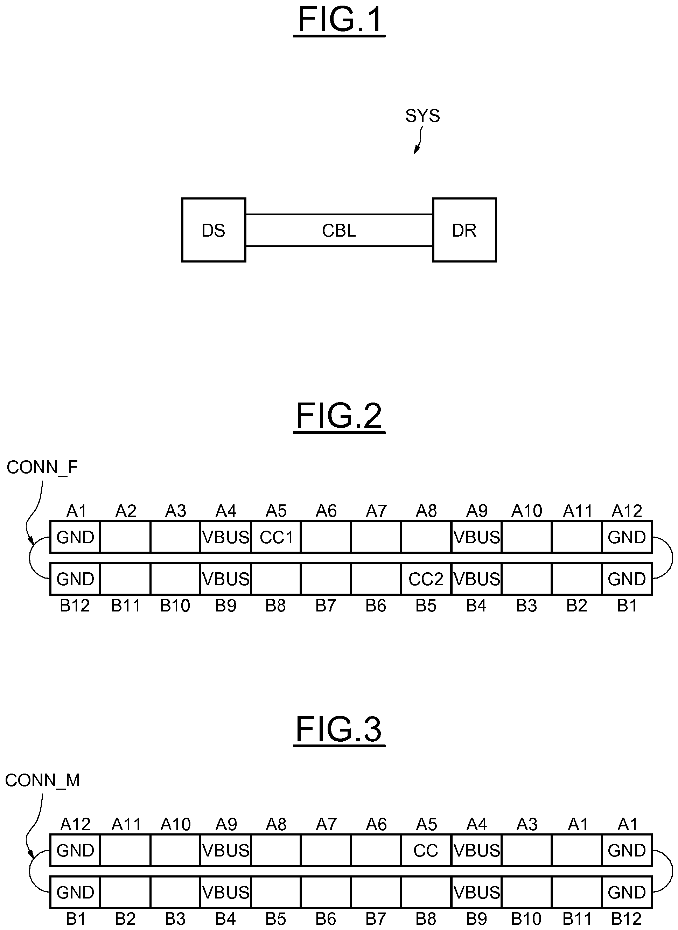

- les figures 1 à 6 illustrent schématiquement des modes de mise en œuvre et de réalisation de l'invention.

La figure 1 illustre schématiquement un exemple d'un système SYS USB type C selon l'invention.

Le système SYS comporte un dispositif source DS USB type C couplé à un dispositif récepteur DR USB type C via un câble CBL USB type C.

Le dispositif source DS et le dispositif récepteur DR comprennent chacun un connecteur CONN_F du type femelle, comportant deux broches de configuration de canal CC1 et CC2, quatre broches de tension d'alimentation de sortie VBUS et quatre broches de masse GND, comme illustré sur la figure 2.

Une chute de tension liée au conducteur de masse du câble CBL peut être mesurée entre une broche de configuration de canal CC1 ou CC2 et une broche de masse GND. Une chute de tension liée au conducteur de potentiel positive du câble CBL peut être mesurée entre une broche de tension d'alimentation de sortie VBUS et une broche de masse GND.

Selon la norme USB 3.1 type C, toutes les broches de même type décrites ci-dessus sont symétriques par rapport au centre du connecteur CONN_F de sorte que le connecteur CONN_F n'impose pas de sens de branchement.

Le câble CBL USB type C comporte deux connecteurs de câble CONN_M du type mâle (figure 3) contenant chacun une broche de configuration de canal CC du câble conçue pour être couplée à une des deux broches de configuration de canal CC1 ou CC2 du dispositif source DS ou du dispositif récepteur DR, quatre broches de tension d'alimentation de sortie VBUS et quatre broches de masse GND. Ces broches de tension d'alimentation de sortie VBUS et de masse GND sont reliées respectivement aux broches correspondantes dans les dispositifs source DS et récepteur DR lors d'une connexion via le câble CBL.

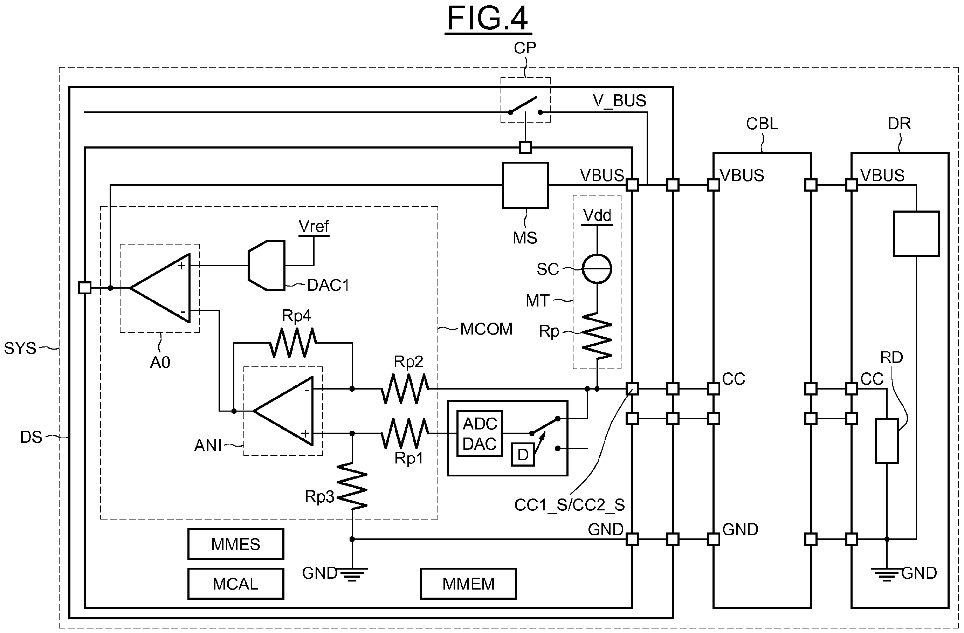

On se réfère maintenant à la figure 4 pour illustrer un exemple d'un dispositif source DS selon l'invention.

Le dispositif source DS comprend un commutateur de puissance CP relié à une broche de tension d'alimentation de sortie VBUS et configuré pour autoriser une délivrance d'une tension d'alimentation de sortie V_BUS lors de son état fermé et bloquer ladite tension d'alimentation de sortie V_BUS lors de son état ouvert. Ladite tension d'alimentation de sortie V_BUS est conçue pour être délivrée au dispositif récepteur DR via le câble CBL et alimenter ledit dispositif récepteur DR.

Le dispositif source DS comprend en outre des moyens de traitement MT configurés pour délivrer au dispositif récepteur DR, par l'intermédiaire d'une source de courant variable SC, un premier, un deuxième et éventuellement un troisième courant ayant respectivement une première valeur, une deuxième valeur et une troisième valeur pendant une durée D, ici par exemple un temps de réponse de configuration de canal.

Le dispositif source DS comprend également des moyens de mesure MMES configurés pour mesurer une première tension V1 et une deuxième tension V2 sur la broche de configuration de canal CC du câble CBL pendant et à l'issue de la durée D.

Les moyens de mesure MMES sont en outre configurés pour mesurer une première, une deuxième et éventuellement une troisième tension initiale sur la broche de configuration de canal CC du câble de façon à déterminer une condition initiale dudit dispositif source DS.

Le dispositif source DS comprend également des moyens de mémoire MMEM configurés pour mémoriser la première tension V1 pendant ladite durée D.

Le dispositif source DS comprend également des moyens de calcul MCAL configurés pour calculer une différence DIF de tension entre les première et deuxième tensions V1 et V2.

Le dispositif source DS comprend également des moyens de commande MCOM configurés pour déterminer une condition initiale DI du dispositif source DS et la qualité dudit câble CBL en fonction des première et deuxième tensions initiales VI1 et VI2, et modifier ladite tension d'alimentation de sortie V_BUS du dispositif source DS en fonction du résultat du calcul de ladite différence DIF de tension.

Les moyens de traitement MT comprennent ici par exemple une source de courant du type « pull-up » reliée à une broche de configuration de canal CC1_S/CC2_S du dispositif source DS.

A titre d'exemple, les moyens de mémorisation MMEM comportent ici un convertisseur analogique/numérique ADC, un convertisseur numérique/analogique DAC et un commutateur commandable par le temps de réponse de configuration de canal (durée D).

Les moyens de commande MCOM comportent par exemple ici un amplificateur non-inverseur ANI dont l'entrée positive est reliée aux moyens de mémorisation MMEM via une première résistance de « pull-up » Rp1 et l'entrée négative est reliée à la broche de configuration de canal connectée CC via une deuxième résistance de « pull-up » Rp2. Ladite entrée positive est en outre reliée à la masse via une troisième résistance de « pull-up » Rp3. Une quatrième résistance de « pull-up » Rp4 est couplée entre l'entrée négative et la sortie dudit amplificateur non-inverseur ANI.

Les moyens de commande MCOM comportent en outre
un amplificateur opérationnel AO dont l'entrée négative est couplée à la sortie dudit amplificateur non-inverseur ANI et l'entrée positive est couplée à une tension de référence Vref via un convertisseur numérique/analogique DAC1 de 10 bits, et
un moyen de surveillance MS couplé entre la sortie dudit amplificateur opérationnel AO et la broche de tension d'alimentation de sortie VBUS.

Ledit moyen de surveillance MS est avantageusement configuré pour ajuster des valeurs de verrouillage de sous-tensions (« Under Voltage Lock Out » : UVLO en anglais) et de surtensions (Over-Voltage Lock Out » : OVLO en anglais). Ces valeurs de verrouillage UVLO et OVLO peuvent avantageusement être auto-étalonnées en fonction de ladite première tension V1 lorsque le dispositif récepteur DS n'est pas alimenté, c'est-à-dire lorsque ledit commutateur de puissance CP est dans son état ouvert.

Les moyens de mesure MMES et de calcul MCAL sont de structure classique et connus en soi.

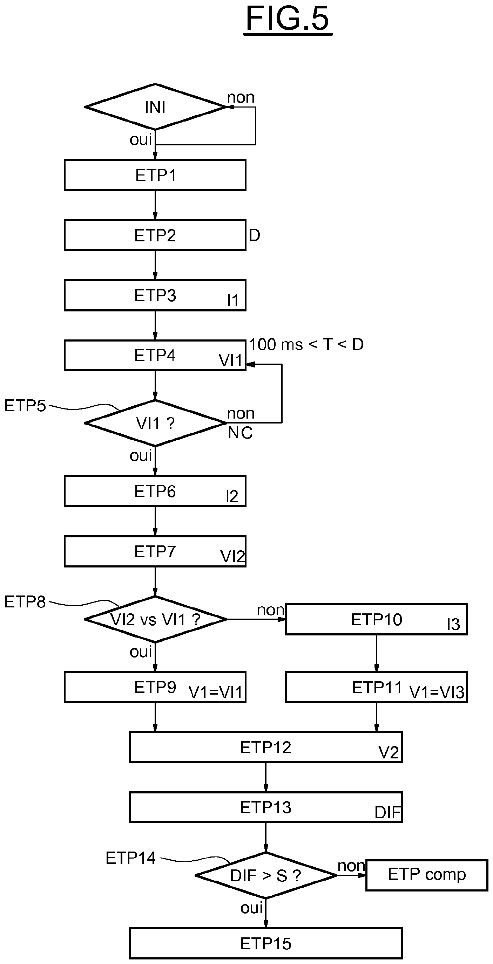

La figure 5 illustre schématiquement un exemple d'un procédé de gestion de tension d'alimentation de sortie d'un dispositif source USB type C, par exemple ledit dispositif source DS du système SYS (figure 4).

Toute surveillance de chute de tension et toute compensation de tension sur ledit câble CBL commence de préférence par une initialisation INI sans connexion du câble CBL entre le dispositif source DS et le dispositif récepteur DR.

Selon la norme USB 3.1 type C, la tension sur les broches de configuration de canal CC1_S et CC2_S du dispositif source DS doit être supérieure à 2,7 V.

Si cette condition d'initialisation INI est satisfaisante, on bascule dans une première étape ETP1 en reliant le dispositif source DS au dispositif récepteur DR via le câble CBL.

Une fois la connexion établie dans la première étape ETP1, une résistance de « pull-down » Rd du dispositif récepteur DR et une résistance de « pull-up » Rp du dispositif source DS sont couplées audit câble CBL de façon à être respectivement reconnues comme « source » et comme « récepteur ».

Dans l'exemple illustré sur la figure 4, une des deux broches de configuration de canal CC1_S ou CC2_S du dispositif source DS est reliée à la broche de configuration de canal CC du câble CBL et à la source de courant SC capable de délivrer différents courants ayant différentes valeurs.

Dans une deuxième étape ETP2, le commutateur de puissance CP bascule dans son état ouvert dès la connexion du câble CBL pendant une durée D. Ledit dispositif récepteur DR n'est donc pas alimenté.

Avant d'effectuer une première mesure d'une première tension V1 sur la broche de configuration de canal CC du câble, le dispositif source DS est de préférence configuré pour réaliser des mesures de condition initiale de façon à connaître la qualité du câble CBL et on détecte une éventuelle surcharge du dispositif récepteur DR.

Il convient de noter qu'un dispositif récepteur DR avec un moyen d'alimentation défectueux ne fournit pas une impédance conventionnellement connue, par exemple ici à 5100 ohms.

Pour vérifier cette condition, on commence par une première mesure initiale d'une première tension initiale VI1.

La source de courant SC est tout d'abord configurée pour délivrer, dans une troisième étape ETP3, un premier courant I1 ayant une première valeur, ici par exemple 80 µA. Bien entendu, cette première valeur pourrait bien être une quelconque autre valeur.

Les moyens de mesure MMES effectuent ensuite dans une quatrième étape ETP4 une première mesure initiale d'une première tension initiale VI1 sur la broche de configuration de canal CC du câble CBL, en présence du premier courant I1.

Si cette première tension initiale VI1 mesurée ne se situe pas autour d'une valeur prédéfinie, ici valant par exemple 5100*80 µV +/-10%, avec 5100 ohms comme la valeur d'impédance d'une résistance de « pull-down » conventionnellement connue, on peut déterminer dans une cinquième étape ETP5 qu'il existe une non-conformité NC du dispositif récepteur DR et qu'ainsi au moins temporairement le dispositif récepteur DR ne peut pas bénéficier de la compensation de la chute de tension dans le câble CBL.

Ladite non-conformité NC peut par exemple résulter d'une batterie défectueuse du dispositif récepteur DR, par exemple une batterie complètement déchargée ou une batterie en mode de sécurité qui n'est pas capable de fournir une tension minimale de fonctionnement.

Dans ce cas-là, on revient à la quatrième étape ETP4 de façon à remesurer la tension initiale VI1 jusqu'à une non-détection de ladite non-conformité NC du dispositif récepteur DR.

Le temps T de la première mesure initiale de la première tension initiale VI1 dure avantageusement pendant au moins 100 ms et ne dépasse pas le temps de réponse de configuration de canal (durée D) soit par exemple 200 ms.

Si la non-conformité NC n'est pas détectée dans la cinquième étape ETP5, la source de courant SC est ensuite configurée pour délivrer dans une sixième étape ETP6 un deuxième courant I2 ayant une deuxième valeur, ici par exemple 320 µA soit quatre fois la première valeur.

Et, dans une septième étape ETP7, les moyens de mesure MMES effectuent une deuxième mesure initiale d'une deuxième tension initiale VI2 sur ladite broche de configuration de canal CC du câble CBL, en présence du deuxième courant I2.

Si la première tension initiale VI1 est autour de ladite valeur connue soit 5100*80 µV, les moyens de commande MCOM vérifient dans une huitième étape ETP8 si la deuxième tension initiale VI2 est bien autour d'une valeur proportionnelle à la première tension initiale VI1, soit autour de 5100*320 µV.

Dans le cas où les première et deuxième tensions initiales VI1 et VI2 sont en proportion (ETP9), la plus petite des première et deuxième tensions initiales VI1 et VI2, ici la première tension initiale VI1, est choisie par les moyens de commande MCOM en tant que première tension V1.

Si les première et deuxième tensions initiales VI1 et VI2 ne sont pas proportionnelles, les première et deuxième tensions initiales VI1 et VI2 ne sont donc pas valides pour déterminer la chute de tension dans le câble CBL.

Dans une dixième étape ETP10, la source de courant SC délivre un troisième courant I3 ayant une valeur inférieure à celle du premier courant I1 audit dispositif récepteur DR avant la fermeture dudit commutateur de puissance CP.

De ce fait, les moyens de mesure MMES effectuent alors une troisième mesure initiale d'une troisième tension initiale VI3 sur la broche de configuration de canal CC du câble CBL dans une onzième étape ETP11. Cette troisième tension initiale VI3 est ensuite utilisée en tant que première tension V1 de façon à calculer la chute de tension dans le câble CBL.

Il convient de noter que toutes ces mesures initiales sont terminées avant la fin du temps de réponse de configuration de canal (durée D) et donc avant la fermeture dudit commutateur de puissance CP.

Dans une douzième étape ETP12, les moyens de mesure MMES effectuent une deuxième mesure d'une deuxième tension V2 après la fermeture dudit commutateur de puissance CP. Dans ce cas là, le dispositif récepteur DR est alimenté par le dispositif source DS via le câble CBL.

Les moyens de calcul MCAL effectuent un calcul de la différence DIF entre les première et deuxième tensions V1 et V2 dans une treizième étape ETP13.

Les moyens de commande MCOM vérifient ensuite si ladite différence DIF dépasse un seuil S prédéfini, ici par exemple 250 mV (ETP14), et représentant la chute de tension maximale autorisée dans le conducteur de masse selon la norme USB type C.

Dans le cas où la différence DIF est inférieure ou égale audit seuil S, les moyens de commande MCOM augmentent, dans une étape de compensation ETP COMP, la tension d'alimentation de sortie V_BUS en fonction de cette différence DIF de façon à compenser la chute de tension du câble CBL. La valeur de compensation sur la tension d'alimentation de sortie V_BUS est avantageusement comprise entre une fois et trois fois la valeur de ladite différence DIF de façon à maintenir un bon fonctionnement dudit câble CBL selon la norme USB 3.1 type C.

En effet ladite différence ne représente que la chute de tension dans le conducteur de masse du câble, c'est-à-dire le conducteur entre une broche de configuration de canal et la masse du câble.

Selon la norme USB type C, la résistance du conducteur de masse est deux fois plus faible que le conducteur véhiculant la tension de potentiel positive VBUS dans cette norme USB type C. Autrement dit, la chute de tension totale dans le câble peut atteindre jusqu'à trois fois ladite différence calculée.

Bien entendu, la valeur de compensation pourrait se limiter à deux fois la valeur de ladite différence dans un cas de topologie avec câble attaché à la source dans lequel les résistances du conducteur de masse et du conducteur véhiculant la tension positive sont identiques.

Afin d'éviter tous risque de surtension coté dispositif récepteur, il est également possible de ne compenser que la chute de tension dans le conducteur de masse, dans la limite des tolérances de la spécification, soit 10% de la tension nominale du côté dispositif source.

Si la différence DIF dépasse le seuil S, le commutateur de puissance CP est configuré pour retourner dans son état ouvert afin de protéger le dispositif source DS ainsi que le dispositif récepteur DR (ETP 15).

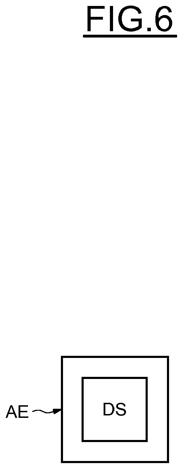

Comme illustré schématiquement sur la figure 6, le dispositif source DS peut être incorporé dans un appareil électronique AE, tel que téléphone portable cellulaire, tablette, ordinateur portable/bureautique, et serveur informatique.

## Revendications

1. Procédé de gestion de la tension d'alimentation (V_BUS) sur une broche d'alimentation de sortie (VBUS) d'un dispositif source (DS) USB type C couplé à un dispositif récepteur (DR) USB type C via un câble (CBL) USB type C, comprenant une première mesure d'une première tension (V1) sur une broche de configuration de canal (CC) du câble (CBL) lorsque le dispositif récepteur (DR) n'est pas alimenté, une deuxième mesure d'une deuxième tension (V2) sur la broche de configuration de canal (CC) lorsque le dispositif récepteur (DR) est alimenté, un calcul d'une différence (DIF) entre les première et deuxième tensions (V1 et V2), et une modification de ladite tension d'alimentation (V_BUS) en fonction de ladite différence (DIF).

2. Procédé selon la revendication 1, dans lequel la modification de ladite tension d'alimentation (V_BUS) comprend une augmentation de ladite tension d'alimentation (V_BUS) d'une valeur de compensation lorsque ladite différence (DIF) est inférieure ou égale à un seuil (S).

3. Procédé selon la revendication 2, dans lequel la valeur de compensation est comprise entre une fois et trois fois la valeur de ladite différence (DIF).

4. Procédé selon la revendication 2 ou 3, dans lequel la modification de ladite tension d'alimentation (V_BUS) comprend une interruption de la tension d'alimentation (V_BUS), si ladite différence (DIF) dépasse le seuil (S).

5. Procédé selon l'une quelconque des revendications précédentes, dans lequel la première mesure de la première tension (V1) est effectuée au cours d'une durée (D) pendant laquelle le dispositif récepteur (DR) n'est pas alimenté, et la deuxième mesure de la deuxième tension (V2) est effectuée à l'issue de ladite durée (D).

6. Procédé selon la revendication 5, comprenant lors de la durée (D) une première délivrance d'un premier courant (I1) sur la broche de configuration de canal (CC) reliée à une résistance de tirage vers le bas (RD) du dispositif récepteur (DR), et une première mesure initiale d'une première tension initiale (VI1) sur la broche de configuration de canal (CC) en présence du premier courant, une deuxième délivrance d'un deuxième courant (12), supérieur et proportionnel au premier courant (I1) dans un rapport de proportionnalité, sur la broche de configuration de canal (CC) reliée à ladite résistance de tirage vers le bas (RD) du dispositif récepteur (DR), et une deuxième mesure initiale d'une deuxième tension initiale (VI2) sur la broche de configuration de canal (CC) en présence du deuxième courant.

7. Procédé selon la revendication 6, dans lequel si les première et deuxième tensions initiales (VI1 et VI2), respectivement mesurées en présence du premier courant et du deuxième courant proportionnels dans ledit rapport de proportionnalité et respectivement délivrés sur ladite broche de configuration de canal (CC) reliée à la résistance de tirage vers le bas (RD), sont proportionnelles dans ledit rapport de proportionnalité, la première mesure de la première tension (V1) est la première mesure initiale de la première tension initiale (VI1).

8. Procédé selon la revendication 6, dans lequel si les première et deuxième tension initiales (VI1 et VI2), respectivement mesurées en présence du premier courant et du deuxième courant proportionnels dans ledit rapport de proportionnalité et respectivement délivrés sur ladite broche de configuration de canal (CC) reliée à la résistance de tirage vers le bas (RD), ne sont pas proportionnelles dans ledit rapport de proportionnalité, alors le procédé comprend en outre une troisième délivrance d'un troisième courant (I3), inférieur au premier courant (I1), sur la broche de configuration de canal (CC) reliée à ladite résistance de tirage vers le bas (RD) du dispositif récepteur (DR), et une troisième mesure initiale d'une troisième tension initiale (VI3) sur la broche de configuration de canal (CC), et la première mesure de la première tension (V1) est la troisième mesure initiale de la troisième tension initiale (VI3).

9. Système USB type C capable de gérer la tension d'alimentation (V_BUS) d'une broche de tension d'alimentation de sortie (VBUS) d'un dispositif source (DS), le système USB type C comprenant le dispositif source (DS) pour être lui-même couplé à un dispositif récepteur (DR) USB type C via un câble (CBL) USB type C, le système USB type C comprenant au sein du dispositif source (DS)
des moyens de mesure (MMES), par l'intermédiaire desquels le dispositif source (DS) est configuré pour effectuer une première mesure d'une première tension (V1) sur une broche de configuration de canal (CC) du câble (CBL) lorsque le dispositif récepteur (DR) n'est pas alimenté et une deuxième mesure d'une deuxième tension (V2) sur ladite broche de configuration de canal (CC) lorsque le dispositif récepteur (DR) est alimenté,
des moyens de calcul (MCAL) configurés pour effectuer un calcul d'une différence (DIF) entre les première et deuxième tensions (V1 et V2), et
des moyens de commande (MCOM) configurés pour effectuer une modification de la tension d'alimentation (V_BUS) en fonction de ladite différence (DIF).

10. Système selon la revendication 9, dans lequel les moyens de commande (MCOM) sont en outre configurés pour augmenter ladite tension d'alimentation (V_BUS) d'une valeur de compensation lorsque ladite différence (DIF) est inférieure ou égale à un seuil (S).

11. Système selon la revendication 10, dans lequel la valeur de compensation est comprise entre une fois et trois fois la valeur de ladite différence (DIF).

12. Système selon la revendication 10 ou 11, dans lequel les moyens de commande (MCOM) sont en outre configurés pour interrompre la tension d'alimentation (V_BUS), si ladite différence (DIF) dépasse le seuil (S).

13. Système selon l'une quelconque des revendications 9 à 12, dans lequel les moyens de mesure (MMES) sont en outre configurés pour effectuer la première mesure de la première tension (V1) au cours d'une durée (D) pendant laquelle le dispositif récepteur (DR) n'est pas alimenté, et la deuxième mesure de la deuxième tension (V2) à l'issue de ladite durée (D).

14. Système selon la revendication 13, comprenant en outre des moyens de traitement (MT) configurés pour délivrer lors de la durée (D), un premier courant (I1) sur la broche de configuration de canal (CC) reliée à une résistance de tirage vers le bas (RD) du dispositif récepteur (DR), et un deuxième courant (12), supérieur et proportionnel au premier courant (I1) dans un rapport de proportionnalité, sur la broche de configuration de canal (CC) reliée à ladite résistance de tirage vers le bas (RD) du dispositif récepteur (DR), les moyens de mesure (MMES) étant en outre configurés pour effectuer en présence du premier courant une première mesure initiale d'une première tension initiale (VI1) sur la broche de configuration de canal (CC) et une deuxième mesure initiale d'une deuxième tension initiale (VI2) sur la broche de configuration de canal (CC) en présence du deuxième courant.

15. Système selon la revendication 14, dans lequel, si les première et deuxième tensions initiales (VI1 et VI2), respectivement mesurées en présence du premier courant et du deuxième courant proportionnels dans ledit rapport de proportionnalité et respectivement délivrés sur ladite broche de configuration de canal (CC) reliée à la résistance de tirage vers le bas (RD), sont proportionnelles dans ledit rapport de proportionnalité, les moyens de commande (MCOM) sont en outre configurés pour sélectionner la première mesure initiale de la première tension initiale (VI1) en tant que la première mesure de la première tension (V1).

16. Système selon la revendication 14, dans lequel, si les première et deuxième tensions initiales (VI1 et VI2), respectivement mesurées en présence du premier courant et du deuxième courant proportionnels dans ledit rapport de proportionnalité et respectivement délivrés sur ladite broche de configuration de canal (CC) reliée à la résistance de tirage vers le bas (RD), ne sont pas proportionnelles dans ledit rapport de proportionnalité, les moyens de traitement sont en outre configurés pour délivrer un troisième courant (I3), inférieur au premier courant (I1), sur la broche de configuration de canal (CC) reliée à ladite résistance de tirage vers le bas (RD) du dispositif récepteur (DR), les moyens de mesure (MMES) sont en outre configurés pour effectuer une troisième mesure initiale d'une troisième tension initiale (VI3) sur la broche de configuration de canal (CC), et les moyens de commande (MCOM) sont en outre configurés pour sélectionner la troisième mesure initiale de la troisième tension initiale (VI3) en tant que la première mesure de la première tension (V1).

17. Système selon l'une quelconque des revendications 9 à 16, comprenant en plus le câble et le dispositif récepteur (DR).

18. Appareil électronique (AE) tel que téléphone portable cellulaire, tablette, et ordinateur portable, comprenant un système selon l'une quelconque des revendications 9 à 16.

## Patentansprüche

1. Verfahren zur Verwaltung der Versorgungspannung (V_BUS) an einem Versorgungsausgangspin (VBUS) einer USB-C-Quellenvorrichtung (DS), die mit einer USB-C-Empfängervorrichtung (DR) über ein USB-C-Kabel (CBL) verbunden ist, umfassend eine erste Messung einer ersten Spannung (V1) an einem Kanalkonfigurationspin (CC) des Kabels (CBL), wenn die Empfängervorrichtung (DR) nicht versorgt wird, eine zweite Messung einer zweiten Spannung (V2) an dem Kanalkonfigurationspin (CC), wenn die Empfängervorrichtung (DR) versorgt wird, eine Berechnung einer Differenz (DIF) zwischen der ersten und der zweiten Spannung (V1 und V2) und eine Änderung der Versorgungsspannung (V_BUS) in Abhängigkeit von der Differenz (DIF).

2. Verfahren nach Anspruch 1, bei dem die Änderung der Versorgungsspannung (V_BUS) eine Erhöhung der Versorgungsspannung (V_BUS) um einen Ausgleichswert umfasst, wenn die Differenz (DIF) kleiner oder gleich einem Schwellenwert (S) ist.

3. Verfahren nach Anspruch 2, bei dem der Ausgleichswert zwischen dem Einfachen und Dreifachen des Werts der Differenz (DIF) liegt.

4. Verfahren nach Anspruch 2 oder 3, bei dem die Änderung der Versorgungsspannung (V_BUS) eine Unterbrechung der Versorgungsspannung (V_BUS) umfasst, wenn die Differenz (DIF) den Schwellenwert (S) überschreitet.

5. Verfahren nach einem der vorhergehenden Ansprüche, bei dem die erste Messung der ersten Spannung (V1) während einer Dauer (D) durchgeführt wird, während der die Empfängervorrichtung (DR) nicht versorgt wird, und die zweite Messung der zweiten Spannung (V2) nach dieser Dauer (D) durchgeführt wird.

6. Verfahren nach Anspruch 5, umfassend während der Dauer (D) eine erste Abgabe eines ersten Stroms (I1) an dem Kanalkonfigurationspin (CC), der mit einem Pulldown-Widerstand (RD) der Empfängervorrichtung (DR) verbunden ist, und eine erste Anfangsmessung einer ersten Anfangsspannung (VI1) an dem Kanalkonfigurationspin (CC) bei Vorliegen des ersten Stroms, eine zweite Abgabe eines zweiten Stroms (I2), der größer als der erste Strom (I1) und in einem Proportionalitätsverhältnis proportional dazu ist, an dem Kanalkonfigurationspin (CC), der mit dem Pulldown-Widerstand (RD) der Empfängervorrichtung (DR) verbunden ist, und eine zweite Anfangsmessung einer zweiten Anfangsspannung (VI2) an dem Kanalkonfigurationspin (CC) bei Vorliegen des zweiten Stroms.

7. Verfahren nach Anspruch 6, bei dem, wenn die erste und die zweite Anfangsspannung (VI1 und VI2), die jeweils bei Vorliegen des ersten Stroms und des zweiten Stroms gemessen werden, die in dem Proportionalitätsverhältnis proportional sind und jeweils an dem mit dem Pulldown-Widerstand (RD) verbundenen Kanalkonfigurationspin (CC) abgegeben werden, in dem Proportionalitätsverhältnis proportional sind, die erste Messung der ersten Spannung (V1) die erste Anfangsmessung der ersten Anfangsspannung (VI1) ist.

8. Verfahren nach Anspruch 6, bei dem, wenn die erste und die zweite Anfangsspannung (VI1 und VI2), die jeweils bei Vorliegen des ersten Stroms und des zweiten Stroms gemessen werden, die in dem Proportionalitätsverhältnis proportional sind und jeweils an dem mit dem Pulldown-Widerstand (RD) verbundenen Kanalkonfigurationspin (CC) abgegeben werden, nicht in dem Proportionalitätsverhältnis proportional sind, das Verfahren ferner eine dritte Abgabe eines dritten Stroms (I3), der kleiner als der erste Strom (I1) ist, an dem mit dem Pulldown-Widerstand (RD) der Empfängervorrichtung (DR) verbundenen Kanalkonfigurationspin (CC) und eine dritte Anfangsmessung einer dritten Anfangsspannung (VI3) an dem Kanalkonfigurationspin (CC) umfasst und die erste Messung der ersten Spannung (V1) die dritte Anfangsmessung der dritten Anfangsspannung (VI3) ist.

9. USB-C-System, das in der Lage ist, die Versorgungsspannung (V_BUS) eines Versorgungsspannungsausgangspins (VBUS) einer Quellenvorrichtung (DS) zu verwalten, wobei das USB-C-System die Quellenvorrichtung (DS) umfasst, um selbst mit einer USB-C-Empfängervorrichtung (DR) über ein USB-C-Kabel (CBL) verbunden zu werden, wobei das USB-C-System in der Quellenvorrichtung (DS) umfasst:
Messmittel (MMES), mithilfe derer die Quellenvorrichtung (DS) dazu konfiguriert ist, eine erste Messung einer ersten Spannung (V1) an einem Kanalkonfigurationspin (CC) des Kabels (CBL) durchzuführen, wenn die Empfängervorrichtung (DR) nicht versorgt wird, und eine zweite Messung einer zweiten Spannung (V2) an dem Kanalkonfigurationspin (CC), wenn die Empfängervorrichtung (DR) versorgt wird,
Rechenmittel (MCAL), die dazu konfiguriert sind, eine Berechnung einer Differenz (DIF) zwischen der ersten und der zweiten Spannung (V1 und V2) durchzuführen, und Steuermittel (MCOM), die dazu konfiguriert sind, eine Änderung der Versorgungsspannung (V_BUS) in Abhängigkeit von der Differenz (DIF) durchzuführen.

10. System nach Anspruch 9, bei dem die Steuermittel (MCOM) ferner dazu konfiguriert sind, die Versorgungsspannung (V_BUS) um einen Ausgleichswert zu erhöhen, wenn die Differenz (DIF) kleiner oder gleich einem Schwellenwert (S) ist.

11. System nach Anspruch 10, bei dem der Ausgleichswert zwischen dem Einfachen und Dreifachen des Werts der Differenz (DIF) beträgt.

12. System nach Anspruch 10 oder 11, bei dem die Steuermittel (MCOM) ferner dazu konfiguriert sind, die Versorgungsspannung (V_BUS) zu unterbrechen, wenn die Differenz (DIF) den Schwellenwert (S) überschreitet.

13. System nach einem der Ansprüche 9 bis 12, bei dem die Messmittel (MMES) ferner dazu konfiguriert sind, die erste Messung der ersten Spannung (V1) während einer Dauer (D), während der die Empfängervorrichtung (DR) nicht versorgt wird, und die zweite Messung der zweiten Spannung (V2) nach dieser Dauer (D) durchzuführen.

14. System nach Anspruch 13, umfassend ferner Verarbeitungsmittel (MT), die dazu konfiguriert sind, während der Dauer (D) einen ersten Strom (I1) an dem mit einem Pulldown-Widerstand (RD) der Empfängervorrichtung (DR) verbundenen Kanalkonfigurationspin (CC) abzugeben und einen zweiten Strom (I2), der größer als der erste Strom (I1) und in einem Proportionalitätsverhältnis proportional dazu ist, an dem mit dem Pulldown-Widerstand (RD) der Empfängervorrichtung (DR) verbundenen Kanalkonfigurationspin (CC) abzugeben, wobei die Messmittel (MMES) ferner dazu konfiguriert sind, bei Vorliegen des ersten Stroms eine erste Anfangsmessung einer ersten Anfangsspannung (VI1) an dem Kanalkonfigurationspin (CC) und eine zweite Anfangsmessung einer zweiten Anfangsspannung (VI2) an dem Kanalkonfigurationspin (CC) bei Vorliegen des zweiten Stroms durchzuführen.

15. System nach Anspruch 14, bei dem, wenn die erste und die zweite Anfangsspannung (VI1 und VI2), die jeweils bei Vorliegen des ersten Stroms und des zweiten Stroms, die in dem Proportionalitätsverhältnis proportional sind und jeweils an dem mit dem Pulldown-Widerstand (RD) verbundenen Kanalkonfigurationspin (CC) abgegeben werden, gemessen werden, in dem Proportionalitätsverhältnis proportional sind, die Steuermittel (MCOM) ferner dazu konfiguriert sind, die erste Anfangsmessung der ersten Anfangsspannung (VI1) als erste Messung der ersten Spannung (V1) zu wählen.

16. System nach Anspruch 14, bei dem, wenn die erste und die zweite Anfangsspannung (VI1 und VI2), die jeweils bei Vorliegen des ersten Stroms und des zweiten Stroms, die in dem Proportionalitätsverhältnis proportional sind und jeweils an dem mit dem Pulldown-Widerstand (RD) verbundenen Konfigurationskanal (CC) abgegeben werden, gemessen werden, nicht in dem Proportionalitätsverhältnis proportional sind, die Verarbeitungsmittel ferner dazu konfiguriert sind, einen dritten Strom (I3), der kleiner als der erste Strom (I1) ist, an dem mit dem Pulldown-Widerstand (RD) der Empfängervorrichtung (DR) verbundenen Kanalkonfigurationspin (CC) abzugeben, die Messmittel (MMES) ferner dazu konfiguriert sind, eine dritte Anfangsmessung einer dritten Anfangsspannung (VI3) an dem Kanalkonfigurationspin (CC) durchzuführen, und die Steuermittel (MCOM) ferner dazu konfiguriert sind, die dritte Anfangsmessung der dritten Anfangsspannung (VI3) als erste Messung der ersten Spannung (V1) zu wählen.

17. System nach einem der Ansprüche 9 bis 16, umfassend zusätzlich das Kabel und die Empfängervorrichtung (DR).

18. Elektronisches Gerät (AE), wie zum Beispiel ein Mobiltelefon, ein Tablet und ein Laptop, umfassend ein System nach einem der Ansprüche 9 bis 16.

## Claims

1. Method for managing the power supply voltage (V_BUS) on an output power supply pin (VBUS) of a USB Type-C source device (DS) coupled to a USB Type-C receiver device (DR) via a USB Type-C cable (CBL), comprising a first measurement of a first voltage (V1) on a channel configuration pin (CC) of the cable (CBL) when the receiver device (DR) is not powered, a second measurement of a second voltage (V2) on the channel configuration pin (CC) when the receiver device (DR) is powered, a calculation of a difference (DIF) between the first and second voltages (V1 and V2), and a modification of said power supply voltage (V_BUS) based on said difference (DIF) .

2. Method according to claim 1, wherein the modification of said power supply voltage (V_BUS) comprises an increase of said power supply voltage (V_BUS) by a compensation value when said difference (DIF) is less than or equal to a threshold (S).

3. Method according to claim 2, wherein the compensation value is between one time and three times the value of said difference (DIF).

4. Method according to claim 2 or 3, wherein the modification of said power supply voltage (V_BUS) comprises an interruption of the power supply voltage (V_BUS), if said difference (DIF) exceeds the threshold (S) .

5. Method according to any one of the preceding claims, wherein the first measurement of the first voltage (V1) is carried out during a duration (D) during which the receiver device (DR) is not powered, and the second measurement of the second voltage (V2) is carried out at the end of said duration (D).

6. Method according to claim 5, comprising during the duration (D) a first delivery of a first current (I1) on the channel configuration pin (CC) connected to a pull-down resistor (RD) of the receiver device (DR), and a first initial measurement of a first initial voltage (VI1) on the channel configuration pin (CC) in the presence of the first current, a second delivery of a second current (12), greater than and proportional to the first current (I1) in a proportionality ratio, on the channel configuration pin (CC) connected to said pull-down resistor (RD) of the receiver device (DR), and a second initial measurement of a second initial voltage (VI2) on the channel configuration pin (CC) in the presence of the second current.

7. Method according to claim 6, wherein if the first and second initial voltages (VI1 and VI2), respectively measured in the presence of the first current and of the second current proportional in said proportionality ratio and respectively delivered on said channel configuration pin (CC) connected to the pull-down resistor (RD), are proportional in said proportionality ratio, the first measurement of the first voltage (V1) is the first initial measurement of the first initial voltage (VI1).

8. Method according to claim 6, wherein if the first and second initial voltages (VI1 and VI2), respectively measured in the presence of the first current and of the second current proportional in said proportionality ratio and respectively delivered on said channel configuration pin (CC) connected to the pull-down resistor (RD), are not proportional in said proportionality ratio, then the method further comprises a third delivery of a third current (13), smaller than the first current (I1), on the channel configuration pin (CC) connected to said pull-down resistor (RD) of the receiver device (DR), and a third initial measurement of a third initial voltage (VI3) on the channel configuration pin (CC), and the first measurement of the first voltage (V1) is the third initial measurement of the third initial voltage (VI3).

9. USB Type-C system capable of managing the power supply voltage (V_BUS) of an output power supply pin (VBUS) of a source device (DS), the USB Type-C system comprising the source device (DS) to be itself coupled with a USB Type-C receiver device (DR) via a USB Type-C cable (CBL), the USB Type-C system comprising in the source device (DS) measurement means (MMES), by means of which the source device (DS) is configured to carry out a first measurement of a first voltage (V1) on a channel configuration pin (CC) of the cable (CBL) when the receiver device (DR) is not powered and a second measurement of a second voltage (V2) on said channel configuration pin (CC) when the receiver device (DR) is powered,
calculation means (MCAL) configured to carry out a calculation of a difference (DIF) between the first and second voltages (V1 and V2), and
control means (MCOM) configured to carry out a modification of the power supply voltage (V_BUS) based on said difference (DIF).

10. System according to claim 9, wherein the control means (MCOM) are further configured to increase said power supply voltage (V_BUS) by a compensation value when said difference (DIF) is less than or equal to a threshold (S).

11. System according to claim 10, wherein the compensation value is between one time and three times the value of said difference (DIF).

12. System according to claim 10 or 11, wherein the control means (MCOM) are further configured to interrupt the power supply voltage (V_BUS), if said difference (DIF) exceeds a threshold (S).

13. System according to any one of claims 9 to 12, wherein the measurement means (MMES) are further configured to carry out the first measurement of the first voltage (V1) during a duration (D) during which the receiver device (DR) is not powered, and the second measurement of the second voltage (V2) at the end of said duration (D).

14. System according to claim 13, further comprising processing means (MT) configured to deliver during the duration (D), a first current (I1) on the channel configuration pin (CC) connected to a pull-down resistor (RD) of the receiver device (DR), and a second current (12), greater than and proportional to the first current (I1) in a proportionality ratio, on the channel configuration pin (CC) connected to said pull-down resistor (RD) of the receiver device (DR), the measurement means (MMES) being further configured to carry out in the presence of the first current a first initial measurement of a first initial voltage (VI1) on the channel configuration pin (CC) and a second initial measurement of a second initial voltage (VI2) on the channel configuration pin (CC) in the presence of the second current.

15. System according to claim 14, wherein, if the first and second initial voltages (VI1 and VI2), respectively measured in the presence of the first current and of the second current proportional in said proportionality ratio and respectively delivered on said channel configuration pin (CC) connected to the pull-down resistor (RD), are proportional in said proportionality ratio, the control means (MCOM) are further configured to select the first initial measurement of the first initial voltage (VI1) as the first measurement of the first voltage (V1).

16. System according to claim 14, wherein, if the first and second initial voltages (VI1 and VI2), respectively measured in the presence of the first current and of the second current proportional in said proportionality ratio and respectively delivered on said channel configuration pin (CC) connected to the pull-down resistor (RD), are not proportional in said proportionality ratio, the processing means are further configured to deliver a third current (13), smaller than the first current (I1), on the channel configuration pin (CC) connected to said pull-down resistor (RD) of the receiver device (DR), the measurement means (MMES) are further configured to carry out a third initial measurement of a third initial voltage (VI3) on the channel configuration pin (CC), and the control means (MCOM) are further configured to select the third initial measurement of the third initial voltage (VI3) as the first measurement of the first voltage (V1).

17. System according to any one of claims 9 to 16, further comprising the cable and the receiver device (DR).

18. Electronic apparatus (AE) such as a cellular mobile telephone, a tablet, and a laptop computer, comprising a system according to any one of claims 9 to 16.
